# EUROPEAN PATENT SPECIFICATION

(11) **EP 2 294 949 B1**
(45) Date of publication and mention of the grant of the patent: **12.11.2014**
(21) Application number: 10171291.7
(22) Date of filing: 29.07.2010
(51) Int. Cl.: A47G 19/14, A47J 31/20, A47J 31/06, A47J 31/18

(54) **Pitcher with infuser**
Kanne mit Teesiebbecher
Cruche avec boule à infusion

(30) Priority: 10.09.2009 US 556835
(43) Date of publication of application: 16.03.2011
(73) Proprietor: Takeya USA Corporation, Huntington Beach CA 92648 (US)
(72) Inventor: Taketani, Hiroshi, Huntington Beach, CA 92648 (US)
(74) Representative: Brand, Thomas Louis

(56) References cited:
- US-A1- 2006 185 521
- US-A1- 2009 178 573

## Description

### BACKGROUND

### 1. Technical Field

The invention relates to a beverage making and dispensing pitcher, and more particularly to a container including an infuser for making steeped beverages.

### 2. Relevant Art

Tea and other steeped beverages are customarily prepared by placing tea leaves in a pot, over which near-boiling water is poured. Typically, it is known to provide screens or strainers, known as infusers, to confine the tea leaves during the brewing cycle.

A device is for instance known from US 2009/0178573.

Unfortunately, beverage containers that use infusers do not allow for the agitation of the infuser so as to help facilitate and expedite the steeping process. Moreover, these containers do not typically provide a means for removing the infuser from a lid during the brewing cycle, while being able to use the same lid on the container to keep the container's contents from spilling or from loosing heat.

### SUMMARY

The invention is defined by the features of claim 1.

In one aspect, a lid assembly is provided including a lid ring removably securable to the rim of a pitcher for holding liquid. The lid assembly also includes a cover that is removably securable to the lid ring; and an infuser that is removably securable to the cover. The infuser when removably secured to the cover rotates in a first direction as the cover is being attached to the lid ring and in a second direction as the cover is being detached from the lid ring.

In another aspect, a lid assembly is provided including a lid ring removably securable to the rim of a pitcher for holding liquid; a cover removably securable to the lid ring; and an infuser removably securable to the cover. The infuser, which includes a well for receiving a charge of beverage flavoring material, is attached to the cover and rotates in a first direction as the cover is being threaded onto the lid ring in a first direction and the infuser rotates in a second direction as the cover is being threaded off from the lid ring in a second direction.

In yet another aspect, a lid assembly is provided including a lid ring having a spout and handle positioned diametrically opposed from the spout. The lid ring also includes internal threads disposed on the lid ring which are removably securable to the rim of a pitcher used for holding liquid. The lid assembly also includes a cover including a cover handle disposed on an external surface of the cover, and a cover skirt including external cover threads disposed on an external surface of the cover skirt configured to thread the cover to ring threads disposed on the lid ring. The cover skirt also includes internal cover threads disposed on an internal surface of the cover skirt. An infuser is included in the lid assembly, which has infuser threads configured to thread with the internal cover threads. The infuser, which includes a well for receiving a charge of beverage flavoring material, is attached to the cover and rotates in a first direction as the cover is being threaded onto the lid ring in a first direction and rotates in a second direction as the cover is being threaded off from the lid ring in a second direction.

This brief summary has been provided so that the nature of this disclosure may be understood quickly. A more complete understanding of the disclosure can be obtained by reference to the following detailed description of the various embodiments thereof in connection with the attached drawings.

### BRIEF DESCRIPTION OF THE DRAWINGS

The foregoing features and other features of the present disclosure will now be described with reference to the drawings of an illustrated embodiment. In the drawings, the same components have the same reference numerals. The illustrated embodiment is intended to illustrate, but not to limit the disclosure. The drawings include the following Figures:

FIG. 1 is an exploded perspective view of a container assembly in accordance with an embodiment;

FIGS. 2A and 2B are top and bottom views respectively of a lid ring component of a lid assembly in accordance with an embodiment;

FIG. 2C is a sectional view of FIG. 2B in accordance with an embodiment; and

FIG. 3 is an exploded view of a cover that includes a removable infuser in accordance with an embodiment.

### DETAILED DESCRIPTION

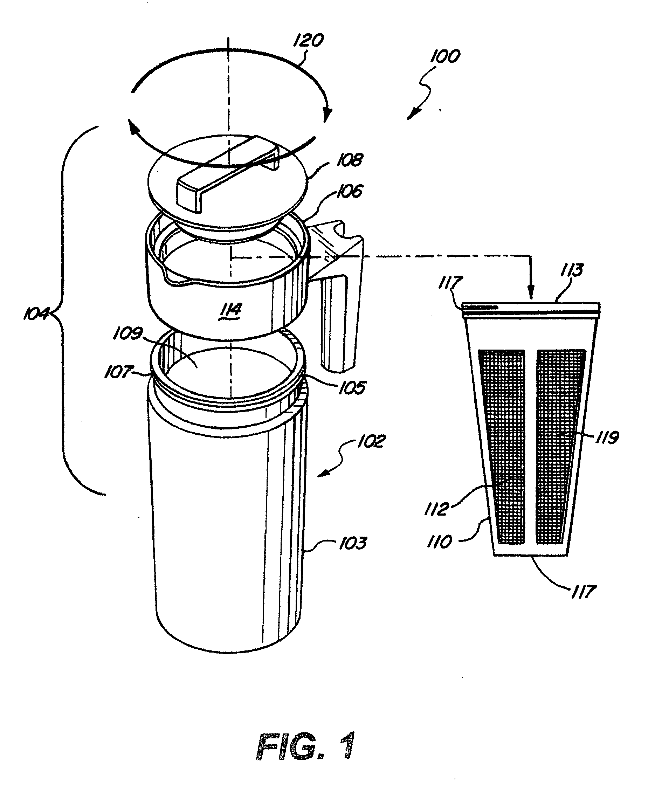

FIG. 1 is an exploded perspective view of a container assembly 100 in accordance with an embodiment. The container assembly 100 includes a container, such as a pitcher, jug, pot or bottle 102 (hereinafter, "pitcher 102") having a lid assembly 104 that includes a lid ring 106, a cover 108 and an infuser 110.

The pitcher 102 includes a container body 103 that defines a volume used to hold or contain a substance which may be made to flow from the container, for example a liquid or a powder. Though not limited thereto, the container body 103 may have a generally circular, oval or rectangular cross-section that terminates at a continuous upper edge or rim 105. The rim 105 defines a circular open top portion 109 of the pitcher 102. In some embodiments, the rim may have formed thereon container threads 107 for mounting and securing the pitcher 102 to a lid, for example, reclosable lid 100.

Alternatively, the pitcher may be designed such that the top rim of the pitcher 102 may be force fit into a corresponding portion of the lid assembly 104 designed to receive the rim 105.

In one embodiment, the infuser 110 includes a well 112 that extends from the upper rim 113 downwardly a predetermined length to a bottom wall 117. The well 112 generally contains tea leaves or the like. Liquid disposed in pitcher 102 enters into the well 112 through holes in the filter portion 119.

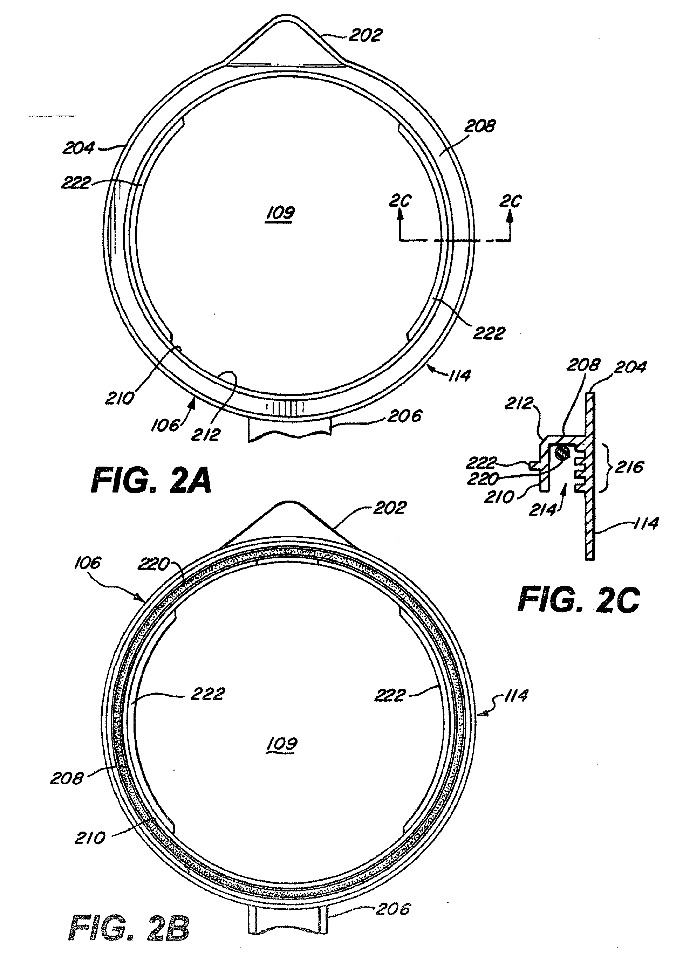

FIGS. 2A and 2B are top and bottom views respectively of the lid ring 106 of the lid assembly 104 in accordance with an embodiment. As shown in FIG. 2A, the lid ring 106 includes a generally cylindrical body portion that provides a side wall 114 (FIG. 1) defining a tubular opening. The lid ring 106 provides the primary coupling interface between the pitcher 102 and the lid assembly 104. As shown in FIG. 2A, the lid ring 106 includes a spout 202 formed on a rim 204 on the circumference of the lid ring 106. The spout 202 is diametrically opposed from a handle 206 formed on an external surface of side wall 114.

Referring now to FIGS. 1, 2A, 2B and 2C, the lid ring 106 includes a lip portion 208 that provides a seat for the cover 108 when the cover is secured to the lid ring 106. As shown in FIG. 2C, a flange portion 210 extends perpendicularly down from the internal edge 212 of the lip portion 208. The lip portion 208 and flange portion 210 create a seating area 214 that is formed and configured to receive the rim 105 of the pitcher 102 between the flange portion 210 and an internal surface of the side wall 114. In one embodiment, internal threads 216 may be formed on side wall 114 in the seating area 214 to provide for a threadable engagement with the threads 107 formed on the rim 105 of the pitcher 102 to removably secure the lid ring 106 to the pitcher 102. In one embodiment, a gasket 220 may be positioned in the seating area 214 to ensure that the lid ring 106 is sealingly mated to the pitcher 102.

Inward of the seating area 214, the flange portion 210 provides a surface upon which ring threads 222 are formed and positioned to provide a threadable engagement with cover 108 described below.

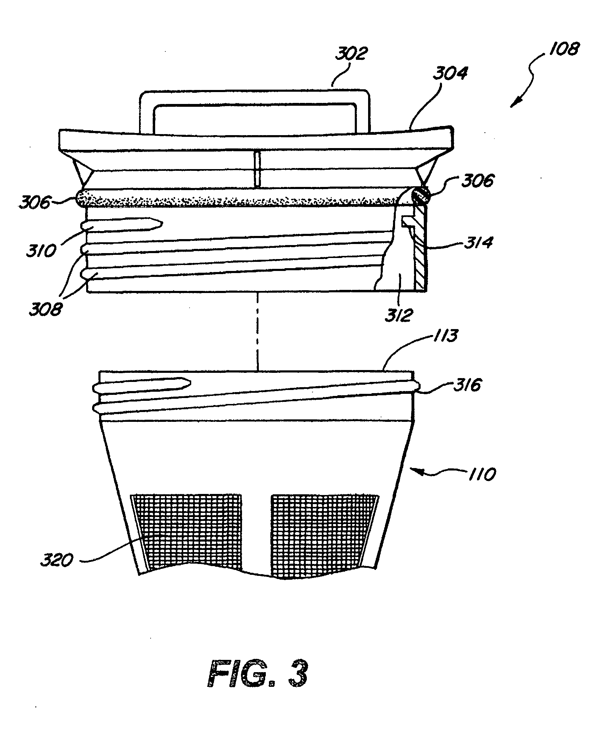

FIG. 3 is an exploded view of the cover 108 that includes a removable infuser 110 in accordance with an embodiment. In one embodiment, cover 108 includes a cover handle 302 formed on top surface 304. In one embodiment, the cover handle resembles a rectangular loop formed on an external surface of the cover. Adjacent and below top surface 304 is a groove configured to hold an O-ring type gasket 306. The O-ring gasket 306 provides a positive seal between the cover 108 and the lid ring 106 when the cover 108 is coupled to the lid ring 106.

The cover 108 includes a cover skirt 310, which extends down away from the top surface 304 on the opposite side from cover handle 302. As shown in the cut-away section in FIG. 3, the cover skirt 310 defines a hollowed space 312 configured to receive infuser 110 as described below.

An external surface of the cover skirt 310 includes a set of external cover threads 308 formed and configured to threadably engage with the ring threads 222 to provide the threadable engagement with cover 108.

Within the hollowed space 312 a set of internal cover threads 314 are formed generally adjacent the top surface 304 on an internal surface of cover skirt 310. The internal cover threads 314 provide a means for the cover 108 to engage with the corresponding infuser threads 115 provided at the upper rim 113 of the infuser 110. In this manner, the infuser 110 may be removably secured to the cover 108.

Referring now to FIGS. 1-3, in operation, a user may assemble the lid assembly 104 in any desired order. The embodiment now described provides one example for the assembly of lid assembly 104. First, the pitcher 102 may be fastened to lid ring 106 by threading the threads 216 of lid ring 106 into threads 105 of pitcher 102.

Next, the removable infuser 110 is attached to the cover 108 by threading the infuser 110 onto internal cover threads 314 in the hollow space 312. The well 112 extends downwardly from the center of the cover 108.

The combined cover 108 and infuser 110 may be inserted into pitcher 102 through open top portion 109 having lid ring 106 already attached. Generally, when the infuser 110 is inserted into pitcher 102 filled with liquid, the bottom of the well 112 is immersed below the surface of the liquid. The level of immersion is dependent on the predetermined length of the infuser well and the depth of the liquid. The holes in the filter portion 119 of the well 112 allow the liquid to circulate through the well 112 and contact any contents therein.

In one embodiment, the cover 108 may be attached and secured to the lid ring 106 by threading external cover threads 308 into ring threads 222. Advantageously, as the cover 108 with infuser 110 attached is being threaded, the cover and infuser are made to rotate, for example, as represented by arrows 120 in FIG. 1. The rotation may be either clockwise or counter-clockwise depending on whether the cover is being opened or closed. The rotation causes the infuser 110 to rotate while being immersed in the liquid creating an agitation or mixing effect between the contents in the well 112 and the liquid. In this manner rotating the infuser 110 causes liquid to enter and exit the well 112 at a faster rate then when the infuser is not being rotated which may facilitate or speed-up the steeping processes.

When cover 108 is less than completely threaded into lid ring 106, the cover is not in a sealed relationship with the lid ring. Thus, liquid from pitcher 102 may be poured out via spout 202. When cover 108 is threaded completely onto lid ring 106, O-ring 306 is seated onto lip portion 208, such that no fluid may be poured out from the pitcher 102.

In one example, when a user determines that a steeped beverage has reached a desired strength, the user may remove cover 108 from lid ring 106 and thus, remove the infuser 110 from the liquid. The user may then remove the infuser 110 from the cover 108. The user may then return the cover 108 to the lid assembly 104 to continue acting as a cover for the beverage in the pitcher 102.

Although the present disclosure has been described with reference to specific embodiments, these embodiments are illustrative only and not limiting. Many other applications and embodiments of the present disclosure will be apparent in light of this disclosure and the following claims.

## Claims

1. A lid assembly (104) comprising:
a lid ring (106) removably securable to the rim of a pitcher for holding liquid, the lid ring (106) defining an opening (109) for dispensing liquid from or adding liquid to the pitcher;
a cover (108) removably securable to the lid ring (106) to cover the opening (109);
an infuser (110) removably securable or attachable to the cover (108), the infuser (110) when removably secured or attached to the cover (108) rotating in a first direction as the cover (108) is being secured or attached to the lid ring (106) and in a second direction as the cover (108) is being detached or removed from the lid ring (106).

2. The lid assembly of Claim 1, wherein the lid ring comprises a spout (202) and handle (206), wherein the handle (206) is diametrically opposed from the spout (202).

3. The lid assembly of Claim 1 or Claim 2, wherein the cover (108) further comprises a rectangular loop cover handle (302) disposed on an external surface of the cover.

4. The lid assembly of any one of Claims 1 to 3, wherein the cover comprises a cover skirt (310) including a set of external cover threads (308) configured to mate with a set of ring threads (222) disposed on the lid ring.

5. The lid assembly of any one of Claims 1 to 4, wherein the cover comprises a cover skirt defining a hollowed space (312), wherein an internal surface of the cover skirt (310) comprises a set of internal cover threads (314) configured to mate with a set of infuser threads (115) disposed on a rim of the infuser.

6. The lid assembly of any one of Claims 1 to 5, wherein the infuser comprises a filter defining holes (119) to allow a liquid to enter the well (112).

7. The lid assembly of any one of Claims 1 to 6, wherein the infuser comprises a well (112) for receiving a charge of beverage flavoring material.

8. The lid assembly of any one of Claims 1 to 7, wherein the cover (108) may be removably secured or attached to the lid ring (106) when the infuser (110) is not removably secured or attached to the cover (108).

9. The lid assembly of any one of Claims 1 to 8, wherein the lid ring further comprises a gasket (220).

10. The lid assembly of any one of Claims 1 to 9, wherein the cover further comprises an o-ring (306).

11. A lid assembly according to any one of Claims 1 to 10, wherein the cover (108) is attached or secured to the lid ring (106) by threading onto the lid ring (106) in a first direction, and is detached or removed from the lid ring (106) by threading off the lid ring in a second direction.

12. The lid assembly of any one of Claims 1 to 11 wherein the lid ring includes internal threads (216) disposed on the lid ring removably securable to the rim of a pitcher for holding liquid.

13. The lid assembly of any one of Claims 1 to 12, wherein the cover (108) includes a cover handle (302) disposed on an external surface of the cover (108), and a cover skirt (310) including external cover threads disposed on an external surface of the cover skirt (310) configured to thread the cover to ring threads disposed on the lid ring (106), the cover skirt (310) including internal cover threads disposed on an internal surface of the cover skirt (310).

14. The lid assembly of Claim 13, wherein the infuser (110) includes infuser threads (115) configured to thread with the internal cover threads (314), wherein the infuser (110) attached to the cover (108) rotates in a first direction as the cover (108) is being threaded onto the lid ring (106) in a first direction and the infuser (110) rotates in a second direction as the cover (108) is being threaded off from the lid ring (106) in a second direction.

15. The lid assembly of any one of Claims 1 to 14, wherein the infuser (110) comprises a filter defining holes (119), wherein rotating the infuser (110) in a first direction or a second direction causes liquid to enter and exit the well (112) through the holes in the filter (119) at a faster rate than when the infuser (110)is not rotating in the first and second directions.

## Patentansprüche

1. Deckelbaugruppe (104), die Folgendes umfasst:
einen Deckelring (106), der entfernbar am Rand einer Kanne zur Aufnahme von Flüssigkeit befestigt werden kann, wobei der Deckelring (106) eine Öffnung (109) zum Ausgeben von Flüssigkeit aus oder zum Geben von Flüssigkeit in die Kanne definiert;
einen Deckel (108), der entfernbar Deckelring (106) befestigt werden kann, um die Öffnung (109) abzudecken;
einen Siebeinsatz (110), der entfernbar am Deckel (108) befestigt oder angebracht werden kann, wobei der Siebeinsatz (110), wenn er entfernbar am Deckel (108) befestigt oder angebracht ist, in einer ersten Richtung rotiert, wenn der Deckel (108) am Deckelring (106) befestigt oder angebracht wird, und in einer zweiten Richtung, wenn der Deckel (108) vom Deckelring (106) gelöst oder entfernt wird.

2. Deckelbaugruppe nach Anspruch 1, wobei der Deckelring einen Ausguss (202) und einen Griff (206) aufweist, wobei der Griff (206) dem Ausguss (202) diametral gegenüber liegt.

3. Deckelbaugruppe nach Anspruch 1 oder Anspruch 2, wobei der Deckel (108) ferner einen rechteckigen, bügelförmigen Deckelgriff (302) aufweist, der an einer Außenseite des Deckels angeordnet ist.

4. Deckelbaugruppe nach einem der Ansprüche 1 bis 3, wobei der Deckel eine Deckelschürze (310) mit einem äußeren Deckelgewinde (308) aufweist, das so konfiguriert ist, dass es zu einem Ringgewinde (222) passt, das Deckelring angeordnet ist.

5. Deckelbaugruppe nach einem der Ansprüche 1 bis 4, wobei der Deckel eine Deckelschürze aufweist, die einen Hohlraum (312) definiert, wobei eine Innenseite der Deckelschürze (310) ein inneres Deckelgewinde (314) aufweist, das so konfiguriert ist, dass es zu einem Siebeinsatzgewinde (115) passt, das an einem Rand des Siebeinsatzes angeordnet ist.

6. Deckelbaugruppe nach einem der Ansprüche 1 bis 5, wobei der Siebeinsatz ein Filter fasst, das Löcher (119) definiert, die das Eintreten einer Flüssigkeit in die Vertiefung (112) zulassen.

7. Deckelbaugruppe nach einem der Ansprüche 1 bis 6, wobei der Siebeinsatz eine Vertiefung (112) zur Aufnahme einer Getränkearomastoffscharge umfasst.

8. Deckelbaugruppe nach einem der Ansprüche 1 bis 7, wobei der Deckel (108) entfernbar Deckelring (106) befestigt oder angebracht werden kann, wenn der Siebeinsatz (110) nicht entfernbar am Deckel (108) befestigt oder angebracht ist.

9. Deckelbaugruppe nach einem der Ansprüche 1 bis 8, wobei der Deckelring ferner eine Dichtung (220) umfasst.

10. Deckelbaugruppe nach einem der Ansprüche 1 bis 9, wobei der Deckel ferner einen O-Ring (306) umfasst.

11. Deckelbaugruppe nach einem der Ansprüche 1 bis 10, wobei der Deckel (108) am Deckelring (106) durch Schrauben auf den Deckelring (106) in einer ersten Richtung angebracht oder befestigt und vom Deckelring (106) durch Abschrauben des Deckelrings in einer zweiten Richtung gelöst oder entfernt wird.

12. Deckelbaugruppe nach einem der Ansprüche 1 bis 11, wobei der Deckelring ein Innengewinde (216) aufweist, das am Deckelring angeordnet ist, der entfernbar am Rand einer Kanne zur Aufnahme von Flüssigkeit befestigt werden kann.

13. Deckelbaugruppe nach einem der Ansprüche 1 bis 12, wobei der Deckel (108) einen Deckelgriff (302), der an einer Außenseite des Deckels (108) angeordnet ist, und eine Deckelschürze (310) mit einem äußeren Deckelgewinde aufweist, das an einer Außenseite der Deckelschürze (310) angeordnet ist, konfiguriert zum Schrauben des Deckels auf das Ringgewinde am Deckelring (106), wobei die Deckelschürze (310) ein inneres Deckelgewinde aufweist, das an einer Innenseite der Deckelschürze (310) geordnet ist.

14. Deckelbaugruppe nach Anspruch 13, wobei der Siebeinsatz (110) ein Siebeinsatzgewinde (115) aufweist, das zum Verschrauben mit dem inneren Deckelgewinde (314) konfiguriert ist, wobei der am Deckel (108) angebrachte Siebeinsatz (110) in einer ersten Richtung rotiert, wenn der Deckel (108) in einer ersten Richtung auf den Deckelring (106) geschraubt wird, und der Siebeinsatz (110) in einer zweiten Richtung rotiert, wenn der Deckel (108) in einer zweiten Richtung vom Deckelring (106) abgeschraubt wird.

15. Deckelbaugruppe nach einem der Ansprüche 1 bis 14, wobei der Siebeinsatz (110) ein Filter umfasst, das Löcher (119) definiert, wobei das Drehen des Siebeinsatzes (110) in einer ersten Richtung oder einer zweiten Richtung bewirkt, dass Flüssigkeit durch die Löcher im Filter (119) schneller in die Vertiefung (112) ein- oder daraus austritt als dann, wenn der Siebeinsatz (110) nicht in der ersten und zweiten Richtung rotiert.

## Revendications

1. Ensemble de couvercle (104) comprenant :
un anneau de couvercle (106) pouvant être fixé de manière détachable au rebord d'un pichet destiné à renfermer un liquide, l'anneau de couvercle (106) définissant une ouverture (109) pour distribuer un liquide depuis le pichet ou ajouter un liquide dans le pichet ;
un couvercle (108) pouvant être fixé de manière détachable à l'anneau de couvercle (106) pour couvrir l'ouverture (109) ;
un infuseur (110) pouvant être fixé ou attaché de manière amovible au couvercle (108), l'infuseur (110), lorsqu'il est fixé ou attaché de manière amovible au couvercle (108), tournant dans un premier sens quand le couvercle (108) est fixé ou attaché à l'anneau de couvercle (106) et dans un second sens quand le couvercle (108) est détaché ou retiré de l'anneau de couvercle (106).

2. Ensemble de couvercle selon la revendication 1, dans lequel l'anneau de couvercle comprend un bec verseur (202) et une poignée (206), la poignée (206) étant diamétralement opposée au bec verseur (202).

3. Ensemble de couvercle selon la revendication 1 ou la revendication 2, dans lequel le couvercle (108) comprend en outre une poignée de couvercle en boucle rectangulaire (302) disposée sur une surface externe du couvercle.

4. Ensemble de couvercle selon l'une quelconque des revendications 1 à 3, dans lequel le couvercle comprend une jupe de couvercle (310) comportant un ensemble de filets de couvercle externes (308) configuré pour s'accoupler à un ensemble de filets d'anneau (222) disposé sur l'anneau de couvercle.

5. Ensemble de couvercle selon l'une quelconque des revendications 1 à 4, dans lequel le couvercle comprend une jupe de couvercle définissant un espace creux (312), une surface interne de la jupe de couvercle (310) comprenant un ensemble de filets de couvercle internes (314) configuré pour s'accoupler à un ensemble de filets d'infuseur (115) disposé sur un rebord de l'infuseur.

6. Ensemble de couvercle selon l'une quelconque des revendications 1 à 5, dans lequel l'infuseur comprend un filtre définissant des trous (119) permettant à un liquide d'entrer dans la cavité (112).

7. Ensemble de couvercle selon l'une quelconque des revendications 1 à 6, dans lequel l'infuseur comprend une cavité (112) destinée à recevoir une charge de substance aromatisante de boisson.

8. Ensemble de couvercle selon l'une quelconque des revendications 1 à 7, dans lequel le couvercle (108) peut être fixé ou attaché de manière amovible à l'anneau de couvercle (106) quand l'infuseur (110) n'est pas fixé ou attaché de manière amovible au couvercle (108).

9. Ensemble de couvercle selon l'une quelconque des revendications 1 à 8, dans lequel l'anneau de couvercle comprend en outre un joint (220).

10. Ensemble de couvercle selon l'une quelconque des revendications 1 à 9, dans lequel le couvercle comprend un joint torique (306).

11. Ensemble de couvercle selon l'une quelconque des revendications 1 à 10, dans lequel le couvercle (108) est attaché ou fixé à l'anneau de couvercle (106) par vissage sur l'anneau de couvercle (106) dans un premier sens, et détaché ou retiré de l'anneau de couvercle (106) par dévissage d'avec l'anneau de couvercle dans un second sens.

12. Ensemble de couvercle selon l'une quelconque des revendications 1 à 11, dans lequel l'anneau de couvercle comprend un filetage interne (216) disposé sur l'anneau de couvercle pouvant être fixé de manière amovible au rebord d'un pichet destiné à renfermer un liquide.

13. Ensemble de couvercle selon l'une quelconque des revendications 1 à 12, dans lequel le couvercle (108) comporte une poignée de couvercle (302) disposée sur une surface externe du couvercle (108), et une jupe de couvercle (310) comportant un filetage de couvercle externe disposé sur une surface externe de la jupe de couvercle (310) configuré pour visser le couvercle sur un filetage d'anneau disposé sur l'anneau de couvercle (106), la jupe de couvercle (310) comportant un filetage de couvercle interne disposé sur une surface interne de la jupe de couvercle (310).

14. Ensemble de couvercle selon la revendication 13, dans lequel l'infuseur (110) comporte un filetage d'infuseur (115) configuré pour se visser sur le filetage de couvercle interne (314), dans lequel l'infuseur (110) attaché au couvercle (108) tourne dans un premier sens quand le couvercle (108) est vissé sur l'anneau de couvercle (106) dans un premier sens et l'infuseur (110) tourne dans un second sens quand le couvercle (108) est dévissé d'avec l'anneau de couvercle (106) dans un second sens.

15. Ensemble de couvercle selon l'une quelconque des revendications 1 à 14, dans lequel l'infuseur (110) comprend un filtre définissant des trous (119), dans lequel la rotation de l'infuseur (110) dans un premier sens ou un second sens amène un liquide à pénétrer dans la cavité (112) ou à en sortir par les trous dans le filtre (119) à un débit plus rapide que lorsque l'infuseur (110) ne tourne pas dans les premier et second sens.
